# EUROPEAN PATENT APPLICATION

(11) **EP 4 663 574 A1**
(43) Date of publication of application: **17.12.2025**
(21) Application number: 25182608.7
(22) Date of filing: 13.06.2025
(51) Int. Cl.: B65D 65/46, B65D 85/804, A47J 31/06, A47J 31/36

(54) **A CELLULOSE-FIBER-BASED CAPSULE WITH A FLANGE THAT COMPRISES A RADIALLY INTERMEDIATE RING-SHAPED LIQUID-BARRIER FLANGE REGION WITH REDUCED LIQUID ABSORPTION PROPERTIES**

(30) Priority: 13.06.2024 NL 2037941
(71) Applicant: Euro-Caps Holding B.V., 3044 CE Rotterdam (NL)
(72) Inventor: KAY, Anthony, 3044 CE Rotterdam (NL); HELD, Micha Alexander, 3044 CE Rotterdam (NL); HABRAKEN, Else, 3044 CE Rotterdam (NL)
(74) Representative: EP&C

(57) **Abstract**

A cellulose-fiber-based capsule has a cup-like capsule body of which a side wall (SW), base wall and flange are integrally made out of a same cellulose-fiber-based material, wherein the cellulose-fiber-based material flange comprises a radially inner ring-shaped sealing flange region (SFR), and a radially outer edge flange region (EFR). According to the invention the cellulose-fiber-based material flange (F) further comprises at least one radially intermediate ring-shaped liquid-barrier flange region (LBFR), wherein the liquid-barrier flange region (LBFR) has lower liquid absorption properties than the sealing flange region (SFR) and edge flange region (EFR).

## Description

### FIELD OF THE INVENTION

The present invention relates to capsules for containing a substance from which beverages can be produced and that are designed for insertion in a beverage production machine in which pressurized liquid enters the capsule in order to interact with the substance in the capsule and to drain a beverage from the capsule.

### BACKGROUND TO THE INVENTION

Such capsules are known in a wide variety of embodiments, and typically comprise a cup-like capsule body with a circumferential side wall, a transverse base wall at a first end of the side wall, and a radially outwardly protruding flange encircling the side wall at its second end.

A system which is widely known as the Nespresso (Registered Trade Mark) system uses aluminium capsules that contain the substance from which the beverage is produced. The substance initially was ground coffee but subsequently capsules containing other substances such as milk powder, hot chocolate and tea have been introduced.

Nespresso capsules each have a frustoconical side wall, a transverse base wall at a smaller diameter end of the side wall, and an outwardly projecting flange which encircles the side wall at its wider diameter end. During manufacturing, the capsule is filled through its wider end and then closed by a foil closure disc that is adhered to the flange.

A beverage production machine which is used with these capsules comprises a structure for positioning the capsule in a cavity of the machine. A longitudinal centre axis of the capsule then extends horizontally and the flange lies in a vertical plane. A cylindrical pressing sleeve of the machine, in use, gets pushed with a leading end against that surface of the flange which faces towards the smaller end of the capsule. At a same time the sleeve then presses the foil closure disc against a profiled back plate. Three piercers penetrate the capsule through the base wall as the sleeve moves forward to press on the flange, allowing pressurized hot liquid to enter the capsule.

The liquid is injected into the capsule at a pressure of, for example, 15-19 Bar, and is heated to a temperature, of for example, 95-98 degrees Celsius. The foil closure disc has supported areas which lie against raised zones of the back plate, and has unsupported areas which span across depressions in the back plate. The quickly rising liquid pressure inside the capsule acting on these unsupported areas causes them to burst permitting the beverage to flow out of the capsule through outlet openings which have thus been formed in the foil closure disc.

For a proper and save operation it is essential that there is a liquid tight seal between the leading end of the pressing sleeve of the beverage production machine and the capsule. If this seal is inadequate, hot pressurized liquid flows between the leading end of the sleeve and the flange. This can result in a not high enough pressure building up inside the capsule for the foil closure disc to burst, which means that beverage extraction fails. It can also result in the volume of beverage produced being reduced as liquid by-passes the capsule and flows into for example a drip tray. More dangerously however this then can also result in escaping hot pressurized liquid getting spouted against a consumer who then may get burns. In order to prevent this, such an aluminium capsule may have its flange equipped with a distinctive sealing ring, like for example a rubber-elastic resilient sealing ring.

A disadvantage with those aluminium capsules however is that the environmental friendliness leaves to be desired.

The same disadvantage goes for plastic capsules.

At present millions and millions of those traditional aluminium and plastic capsules get consumed each day worldwide, most of which end up in waste processing facilities where the capsules get burned, including the sealing rings made of another material than the aluminium and plastic materials of the capsule bodies themselves.

As an alternative for aluminium and plastic capsules, biodegradable capsules have been developed, like ones that have their capsule body partly made out of compostable cellulose fiber-based materials with some kind of biodegradable plastic liner added as oxygen barrier thereto. The oxygen barrier liner is needed to keep the substance inside the capsule, like coffee powder, fresh for a long period of time, and to be able to withstand the high liquid pressure that occurs inside the beverage production machine.

For this type of cellulose fiber-based capsule with plastic oxygen barrier liner to properly function during a brewing operation it is crucial that the cup-like capsule body at the start of a brewing cycle gets pierced by piercers at its aimed entrance area for creating entrance openings when a sleeve of the brewing chamber of the beverage production machine moves forward. This is necessary to allowing pressurized hot liquid to enter into the capsule.

This piercing however is difficult in present machines because the piercers thereof are specifically designed for piercing through aluminium, and for that are designed with relative wide obtuse-angled triangular-shaped metal piercer heads. This type of 'blunt' piercers however is way less suitable to pierce through cellulose fiber-based material layers of biodegradable capsules, because those materials tend make the base wall and side wall of the capsule body prone to have a tendency to deform inward together with the piercers rather than be pierced by them. This tendency to deform inwards is even worsened due to the fact that the cellulose fiber-based materials immediately start to absorb liquid as soon as this liquid starts entering the brewing chamber and thus also gets in direct contact with the outside surface of the base wall and side wall.

Although the flange of the capsule largely lies outside the brewing chamber and thus does not get in direct contact with the liquid that gets injected under high pressure into the brewing chamber, the liquid absorption by the cellulose fiber-based materials of the base wall and side wall still is known to lead to issues through indirect liquid absorption into the flange area via the side wall. This indirect wetting of the flange leads to structural weaknesses, deformation and swelling of the flange, which complicates ejection from the brewing chamber into a trash bin of the machine at the end of the brewing cycle.

For those ejection problems special measures need to be taken.

For example WO-2023/051967 discloses a capsule of which the cup-like capsule body has been integrally made out of a wood-pulp-based material, starting with a wet forming process followed by heating and pressing in a mould to set the material and remove water therefrom. Subsequently a caramelised sugar or starch coating can be applied to the wood-pulp-based material capsule body to close pores/interstices between the fibres. A biodegradable plastic liner then gets applied against the inner side of the capsule body to give the capsule body its oxygen barrier function during storage and enough strength to withstand the high pressures during brewing. Thus the capsule-body consists for 82% of cellulose-fibers. Together with the biodegradable plastic liner, this makes this capsule home-compostable.

In order to deal with piercing problems it is foreseen in WO-2023/051967 to include a specially treated ring-shaped perforation region at a transition between the base wall and the side wall of the capsule body. The wood-pulp-based material has been locally treated there, for example by pressing or heat treatment, in order to make the perforation region locally stronger and thus easier pierceable by the piercers. Secondly, V-shaped channelled interspaced wall portions are provided as stiffeners along the transition between the base wall and the side wall in order to further stiffen the capsule body there and help it to resist inward deformation when the perforation region is to be pierced by the piercers of the machine.

Those special measures however make this home-compostable capsule relative expensive (10% more expensive than aluminium capsules) and difficult to manufacture.

Another even more important disadvantage is that the capsule is unable to meet the more stringent requirements for industrial-compostability. Consumers therefore are not allowed to throw them in the green waste bin for vegetable, fruit and garden waste (VFG). Since only a few people presently have home-composting facilities, this means that still most of those capsules shall end up in waste processing facilities where the capsules get burned.

Further it is noted that the piercing can create uneven holes, leading to inconsistent wetting of the substance inside the capsule, like ground coffee, and a phenomenon known as "channelling", where the injected pressurized liquid, like water, flows through paths of least resistance through the substance, resulting in poor extraction.

In order to deal with ejection problems it is foreseen in WO-2023/051967 to equip the flange with a stepwise raised free outer circumferential edge region. Thus it is aimed to increase the structural integrity of the flange. Although the flange has a uniform wall thickness over all its regions, the stepwise raised free outer circumferential edge region inevitably increases the total height of the flange.

In practice it has appeared to frequently occur that this type of capsule gets stuck in the machine after beverage production instead of getting automatically ejected into the machine's trash bin. A user frequently needs to manually push the used capsule out of the brewing zone.

This getting stuck seems caused by the fact that the wood-pulp-based materials of the capsule absorbed a large amount of water, making it about 15% heavier in weight at the end of a brewing cycle. This heavier weight causes the capsule to have a larger tendency to tilt from an originally horizontal orientation to a slanted downward orientation due to gravity as soon as it is released by the brewing chamber. This larger tendency to tilt leads to a higher risk of the flange getting stuck in between guidance slits that are specially provided in the machine for guiding ejected capsules towards the machine's trash bin, particularly because the flange also swells somewhat due to its indirect water absorption out of the wet side wall and brewing chamber.

Furthermore, the provision of the stepwise raised free radially outer circumferential edge region limits the available flat surface area against which the foil closure disc can be sealed.

A cellulose-fiber-based capsule according to the preamble of claim 1 is known from WO-2024/077343. Here the base wall, side wall and flange of a capsule body are integrally formed of compressed fiber-pulp material. One or more coating materials are applied to the capsule body to enhance the capacity of the capsule to act as a barrier to one or more atmospheric gases.

The fiber-pulp material flange here includes a radially inner chamber engagement region that, during preparation of a beverage, is to be in sealing engagement with components of the beverage production machine that define the brewing chamber. The flange further includes a radially outer edge region that, during production of a beverage, lies outside the brewing chamber.

The fiber-pulp material at the location of the chamber engagement region of the flange has been given a relative low density that is less than the density of the fiber-pulp material in the base wall and side wall, as well as less than the density of the fiber-pulp material in the edge region of the flange. Furthermore it can be seen that the chamber engagement region of the flange is made much thicker than the base wall and side wall, as well as the edge region of the flange. The reason for this is to have the chamber engagement region of the flange compressed to a large degree to have it act as integral compressible sealing ring portion.

A disadvantage with this capsule is that it is relative difficult and expensive to manufacture. In particular the oversized relative thick chamber engagement region is difficult to accurately form. It requires substantive larger amounts of fiber-pulp slurry to be locally accumulated at the aimed chamber engagement region during a wet forming step, compared to the relative thin-walled remainder of the capsule body. This local higher degree of accumulation of wet fiber-pulp is difficult to control and difficult to get uniform around the entire circumference. This is further complicated due to the fact that in WO-2024/077343 the chamber engagement region itself is foreseen to have a specific profile, namely one that gradually downwardly angles in the radially outward direction towards the edge region and one that has a sort of swelling gutter provision in its radially inward direction towards the side wall.

Due to the heavier capsule weight after brewing in combination with the presence of the oversized relative thick low-density chamber engagement region of the flange, the capsule of WO-2024/077343 also runs a high risk of getting stuck in the machine after beverage production. In order to try to overcome this, it is even foreseen to equip the downwardly angled section of the chamber engagement portion of the flange with greater roughness, presumably leading to lower adhesion between the pulp material and the capsule holder due to weaker bonds being created by capillary bridges.

### BRIEF DESCRIPTION OF THE INVENTION

The present invention aims to overcome those disadvantages at least partly or to provide a usable alternative. In particular the present invention aims to provide an economic capsule of a both home- and industrial-compostable type of which the durability and functionality both during brewing as well as during ejection afterwards are improved.

According to the present invention this aim is achieved by a cellulose-fiber-based capsule for containing a substance, like ground coffee, from which a beverage can be produced, the capsule being designed for insertion in a beverage production machine in which pressurized liquid, like water, enters the capsule in order to interact with the substance in the capsule and to drain a beverage from the capsule, comprising:
- a cup-like capsule body that comprises:
   ∘ a circumferential side wall;
   ∘ a transverse base wall at a first end of the side wall; and
   ∘ a radially outwardly protruding flange encircling the circumferential side wall at its second end,
      wherein the side wall, base wall and flange are integrally made out of a same cellulose-fiber-based material,
      wherein the cellulose-fiber-based material flange comprises:
         - a radially inner ring-shaped sealing flange region; and
         - a radially outer edge flange region.
            According to the inventive thought the cellulose-fiber-based material flange further comprises:
            - at least one radially intermediate ring-shaped liquid-barrier flange region that extends from one surface of the flange to the other opposite surface,
      wherein the liquid-barrier flange region has lower liquid absorption properties than the sealing flange region and edge flange region.

The cellulose-fiber-based material layer at the location of the radially inner ring-shaped sealing flange region is configured to sealingly engage with a pressing sleeve of a beverage production machine that defines a brewing chamber. No distinctive sealing ring of another type of material is needed for that.

The provision of the radially intermediate liquid-barrier flange region with its reduced liquid absorption properties has proven to be well able to have the flange maintain its structural integrity during and after the brewing process, ensuring reliable ejection from the brewing chamber. Even if the entire side wall and base wall become soaking wet during brewing, the liquid is unable to quickly flow into and passed by the cellulose-fiber-based material at the location of the liquid-barrier flange region.

Tests have shown that not only the liquid-barrier flange region with its inherent reduced liquid absorption properties is well able to remain substantially dry during and after brewing, but that also the entire edge flange region is well able to remain substantially dry owing to this. The radially intermediate ring-shaped liquid-barrier flange region extends over the entire thickness of the flange at that location, that is say from one surface of the flange to the other opposite surface of the flange at that location.

The invention makes it possible to design the cellulose-fiber-based material sealing flange region and edge flange region rather simple and straightforward, in particular flat faced at same heights and with substantially same wall thicknesses. The thickness of the sealing flange region then can advantageously be designed to be deformable to the shape of the brewing chamber sealing structure. The thickness of the edge flange region can advantageously be designed as thin as ones of the traditional aluminium capsules including the distinctive sealing ring provided thereupon. Since the cellulose-fiber-based material edge flange region and liquid-barrier flange region may both remain substantially dry during brewing, they also do not have to swell, and can remain being substantially as thin and strong as they were at the start of the brewing cycle.

Thus it has appeared that even when the entire side wall and base wall are soaking wet at the end of a brewing cycle, making the used capsule heavier, it does not become a problem that the capsule has a larger tendency to tilt to a downward angled orientation as soon as it is released by the brewing chamber. The dry, thin and strong flange can smoothly slide down through the guidance slits towards the beverage production machine's trash bin.

The firmness and dryness of the radially intermediate ring-shaped liquid-barrier flange region and radially outer edge flange region are deemed to play an important role in this because those flange regions are the ones that get to slide through the guidance slits and do not suffer from sticking effects due to lower adhesion and lack of capillary bridges between the dry cellulose-fiber-based material of those flange regions and the guidance slits.

The cellulose-fiber-based material of the novel and inventive liquid-barrier flange region can be treated in a few ways during manufacturing to obtain the lower liquid absorption properties than the cellulose-fiber-based material of the sealing flange region and edge flange region. For example a special biodegradable compostable coating/impregnation medium can be locally applied to the cellulose-fiber-based material at the location of the foreseen radially intermediate ring-shaped liquid-barrier flange region to close pores/interstices between the cellulose fibers at that location. This coating/impregnation medium then is applied such that it penetrates/impregnates substantially the entire radially intermediate ring-shaped liquid-barrier flange region from one surface of the flange to the other opposite surface, such that to the porosity there is reduced and preferably blocked. Such a coating may for example be formed by a caramelised sugar or starch.

In a preferred embodiment the cellulose-fiber-based material at the location of the liquid-barrier flange region may have a reduced thickness and increased density compared to the thickness and density of the cellulose-fiber-based material at the locations of both the sealing flange region and edge flange region.

Preferably, the cellulose-fiber-based material at the location of the liquid-barrier flange region may have a reduced thickness of at least 25%, in particular about 40-50%, compared to the thickness of the cellulose-fiber-based material at the locations of both the sealing flange region and edge flange region, and wherein the cellulose-fiber-based material at the location of the liquid-barrier flange region may have an increased density of at least 25%, in particular about 40-50%, compared to the cellulose-fiber-based material at the locations of both the sealing flange region and edge flange region. Thus the flange can be designed with one or more locally more firmly compacted intermediate concentric circles of lesser thickness and/or density than the neighbouring sealing flange region and edge flange region in order to obtain the foreseen liquid barrier functionality therebetween. This is an economic way to obtain the liquid-barrier flange region while at the same time the lower liquid absorption properties can reliably be mastered and fine-tuned to the required level.

The flange thus may include regions of varying thicknesses by being provided with one or more densified concentric indented circular-shaped indented areas, each with lower thickness and higher density than their neighbouring flange regions. The denser indented areas are more resistant to liquid absorption and provide additional structural support.

A higher degree of local compacting to achieve the desired flange geometry can easily be integrated in one or more of heat pressing steps when the cellulose-fiber-based capsule for example is manufactured by means of a wet-forming process followed by a multi-stage heat pressing technique. The cellulose-fiber-based material of the side wall and base wall as well as of the sealing flange region, liquid-barrier flange region and edge flange region then initially can all be wet formed with a uniform layer thickness, be heat pressed in a first step at a substantially same level of compacting, and then in a second and/or third step be heat pressed such that mainly only the liquid-barrier flange region gets more compacted in order to obtain its higher density and reduced thickness leading to its inherent lower liquid absorption properties than the rest of the capsule body. For obtaining the flange design according to the invention it then suffices to design subsequent moulds to be used for the subsequent heat pressing steps such that a locally increased pressure gets exerted on the cellulose-fiber-based material at the location of the liquid-barrier flange region flange during moulding, resulting in denser and more robust indented areas that significantly slow down liquid absorption during a brewing cycle.

In addition thereto the thickness of the sealing flange region and edge flange region can be between 0.6-1 mm, in particular about 0.75 mm, and the thickness of the liquid-barrier flange region can be between 0.2-0.5 mm, in particular about 0.45 mm.

In a preferred further or alternative embodiment at least two spaced apart ones of the liquid-barrier flange regions can be provided, with a ring-shaped strengthening flange region provided in between them that then may have higher liquid absorption properties than the liquid-barrier flange regions. Thus advantageously the further profiled flange design gets even more strengthened, whereas at a same time it has appeared that the two spaced apart integrated liquid-barrier provisions are even better capable to maintain the dryness and firmness of the radially outermost edge flange region.

For example, the sealing flange region, the strengthening flange region and the edge flange region then may be designed with substantially same radial widths and thicknesses and all reaching out to a same height level.

In a preferred further or alternative embodiment the cellulose-fiber-based material capsule body, including a front surface of the cellulose-fiber-based material flange, may not be equipped with a plastic oxygen barrier liner. This offers a great advantage for the capsule industry in that it is able to make the entire capsule-body, including its substance content and foil closure lid, truly compostable, not only at a relative slow home-composting rate, but more importantly even at relative fast industrial-composting rates.

The foil closure disc then advantageously can also be made out of cellulose-fiber-based material, in particular paper, more in particular filter paper, that can be directly adhered against the front surface of the cellulose-fiber-based material flange, for example by means of a biodegradable compostable hotmelt.

In a preferred further or alternative embodiment a front surface of the cellulose-fiber-based material flange that is configured for connecting a foil closure disc against, can be flat faced along the sealing flange region, liquid-barrier flange region and edge flange region. In addition thereto the foil closure disc then may have radially outer dimensions that are the same as the ones of the cellulose-fiber-based material flange, such that the foil closure disc is connectable to the entire flat faced front surface of the cellulose-fiber-based material flange. This adds to the strength with which the foil closure disc can be connected to the flange, which in turn helps to form a neatly distributed pattern of outlet openings to be formed in the foil closure disc when liquid arrives inside the capsule at a pressure of, for example, 15-19 Bar, and is heated to a temperature, of for example, 95-98 degrees Celsius.

In a preferred further or alternative embodiment the cellulose-fiber-based material out of which the side wall, base wall and flange of the cup-like capsule body are made can be integrally manufactured by means of wet forming out of pulp, in particular paper-based pulp, followed by one or more heat pressing steps.

In a preferred embodiment hereof, during the wet forming manufacturing step, the cellulose-fiber-based pulp material is initially wet-formed into the desired capsule-body shape. In the subsequent first heat press manufacturing step, the capsule body then undergoes an initial heat press to set its basic shape and structure and significantly reduce the amount of water in the shaped wet pulp. In a subsequent second heat press manufacturing step, the capsule body is subjected to a second heat press at a higher temperature and pressure to start formation of finer geometry utilizing specific moulds to create one or more densified concentric circles of lesser thickness in the flange. This step also further decreases the moisture content in the capsule body. Then in a final heat press manufacturing step it can be ensured that the geometrical features are well-defined and the cellulose-fiber-based pulp material is thoroughly dried and hardened. The manufacturing process thus creates a flange with denser indented areas, ensuring the following benefits:
- Enhanced Structural Integrity: The variable thickness in the flange creates denser areas that are less prone to softening, maintaining the flange's firmness.
- Reduced Water Absorption: The design effectively slows down the rate of liquid absorption into the flange, preserving its structural integrity during brewing.
- Reliable Ejection: With improved rigidity, the capsule flange can be reliably ejected from the brewing chamber without deformation.
- Eco-Friendly: Constructed from biodegradable compostable pulp cellulose fibers, the capsule offers an environmentally friendly alternative to traditional materials.

The invention also relates to a manufacturing method according to claims 12 and 13, as well as to a beverage production assembly according to claim 14, and to a beverage production method according to claim 15.

Further preferred embodiments of the invention are stated in the dependent subclaims.

### DETAILED DESCRIPTION OF THE DRAWINGS

The invention shall now be explained in more detail below by means of describing some exemplary embodiments in a non-limiting way with reference to the accompanying drawings, in which:
- Fig. 1a-b show photographs of an embodiment of the cellulose-fiber-based capsule according to the invention;
- Fig. 2a-c show a perspective, partial cross-sectional and enlarged partial cross-sectional view of the capsule of fig. 1;
- Fig. 2d shows a cross-sectional view of the entire capsule of fig. 1 when placed inside a pressing sleeve of a commonly used beverage production machine;
- Fig. 3a-d show schematic views of the capsule of fig. 2 during various stages of a brewing cycle inside a beverage production machine;
- Fig. 4a-c show schematic enlarged partial views shortly before closing of a pressing sleeve of the brewing chamber, a starting of liquid injection in the closed brewing chamber, and the liquid permeating through the capsule side wall and base wall and extracted beverage flowing out through a perforated foil closure disc during a brewing cycle; and
- Fig. 5a-b show enlarged partial cross-sectional views of fig. 3 just preceding respectively after closing of the pressing sleeve.

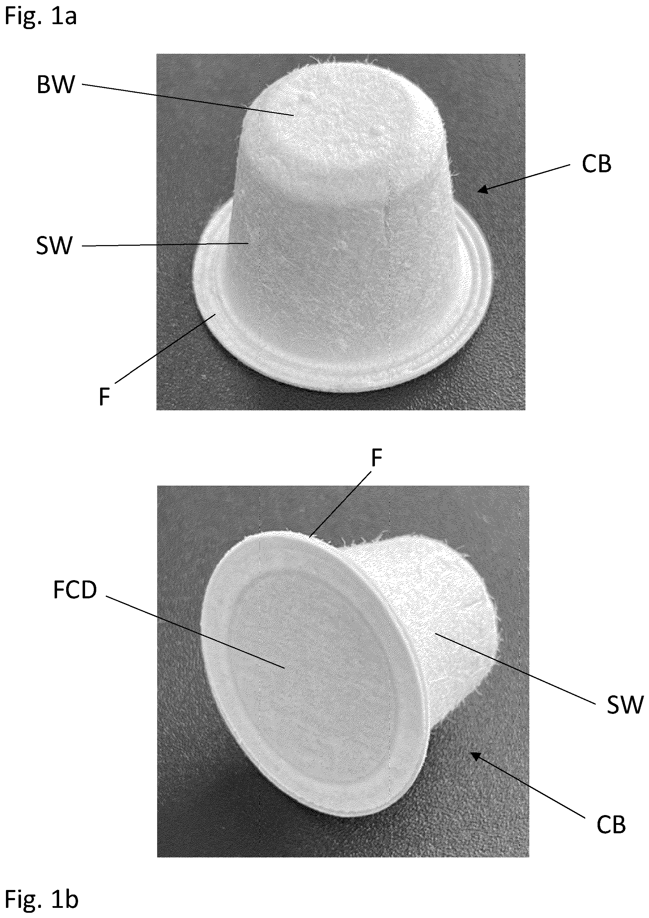

In fig. 1 two capsules are shown. Each capsule comprises a paper-pulp material capsule body CB filled with a substance S and closed by a paper filter material foil closure disc FCD. The capsule body CB comprises a circumferential side wall SW, a transverse base wall BW, and a radially outwardly protruding flange F. The side wall, SW, base wall BW and flange F are integrally made out of the paper-pulp.

The integrally made paper-pulp side wall, base wall and flange are substantially rigid, with which it is meant that the capsule body is well able to remain shape prior to insertion in a beverage production machine.

The foil closure disc FCD is made out flexible thin filter paper.

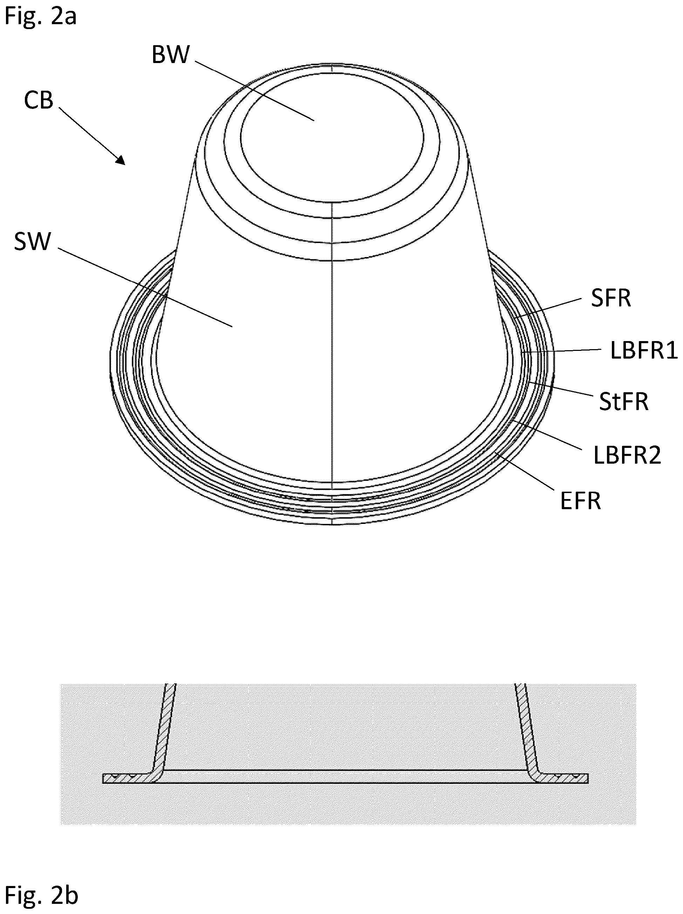

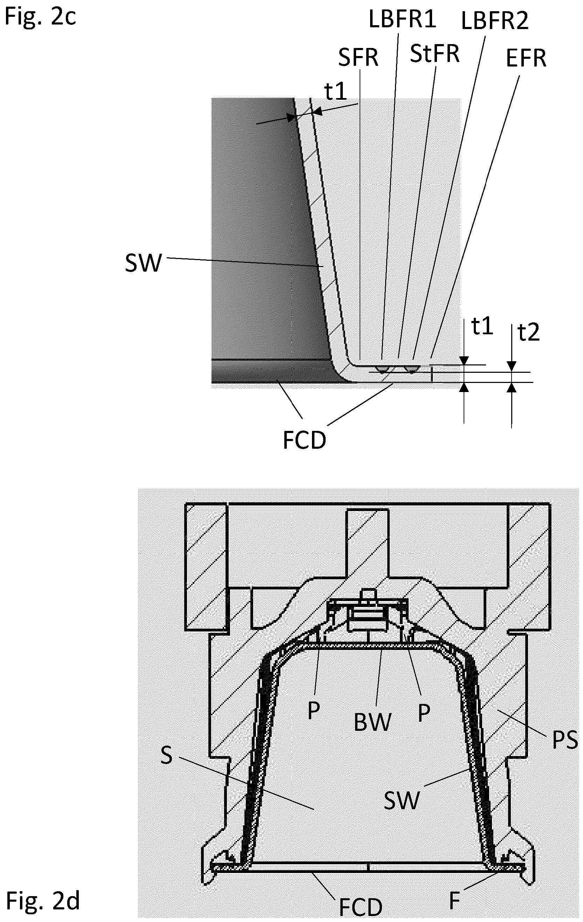

At the locations of the side wall SW and base wall BW, the paper-pulp layer that forms the side wall SW and base wall BW has been compacted to a thickness t1 of about 0.75 mm with relative low density of the cellulose fibers. See fig. 2.

The paper-pulp flange F comprises distinctive concentric ring-shaped regions where the paper-pulp layer that forms the flange F has been compacted to varying thicknesses t1, t2:
- a sealing flange region SFR compacted to the thickness t1 with relative low density of the cellulose fibers;
- a first liquid-barrier flange region LBFR1 compacted to a thickness t2 of about 0.45 mm with relative high density of the cellulose fibers;
- a strengthening flange region StFR compacted to the thickness t1 with relative low density of the cellulose fibers;
- a second liquid-barrier flange region LBFR2 compacted to the thickness t2 with relative high density of the cellulose fibers; and
- an edge flange region EFR compacted to the thickness t1 with relative low density of the cellulose fibers.

For obtaining those different degrees of compacting, a manufacturing method is used that starts with a wet forming step in which a layer of wet paper-pulp is suctioned against an upper mould that has been lowered into a bath filled with the wet paper pulp. The upper mould has a shape complementary to the capsule body CB with flat-faced back surface for the flange. The layer of wet-paper pulp sucked against the upper mould is uniform for the entire capsule body CB.

Subsequently the upper mould is raised out of the bath, moved sideways to be positioned above a lower mould. The lower mould has a shape complementary to the capsule body CB with flat-faced front surface for the flange. The upper mould together with the layer of wet-paper pulp hanging underneath it and the lower mould are moved towards each other to a closed position in which a first heat pressing step is performed on the layer of wet paper-pulp. During this first heat pressing step, the moulds are heated and the layer of wet paper-pulp gets compressed between the two moulds. During this a large amount of the water inside the layer of wet paper-pulp gets pressed out of and evaporates out of the paper-pulp layer. For this, the moulds have been equipped with exit openings for the water to escape. The entire capsule body CB, still with entirely flat-faced front and back surfaces for the flange F gets compressed to a same degree during this first heat pressing step.

Subsequently the upper and lower moulds are moved away from each other to an open position. The upper mould then can be moved empty back to a position above the bath to start a new manufacturing cycle. The lower mould carries the compressed capsule body CB, still with entirely flat-faced front and back surfaces for the flange F.

Subsequently a new type of upper mould takes the place This new type of upper mould has a shape complementary to the capsule body CB now including annular ridges at the location of the liquid-barrier flange regions to be formed. The lower mould together with the compressed capsule body CB, still with entirely flat-faced front and back surfaces for the flange F, and the new type of upper mould are moved towards each other to a closed position in which a second heat pressing step is performed on the compressed capsule body CB. During this second heat pressing step, the moulds are heated and the compressed capsule body CB gets compressed again between the two moulds. During this some extra water gets pressed out and evaporates out of the paper-pulp layer. This time however the liquid-barrier flange regions LBFR get extra compressed to a larger degree due to the presence of the annular ridges in the upper mould. For this, the moulds have been equipped with exit openings for the water to escape. The rest of the capsule body CB, that is to say the side wall SW, base wall BW and other regions of the flange F get compressed to a same but somewhat lower degree during this second heat pressing step.

This process gets repeated for a third heat pressing step to be performed, then with a new lower mould. The paper-pulp capsule body CB at the end is not coated at its inner side with some kind of biodegradable plastic oxygen barrier liner.

The result of this integrally manufacturing by means of the wet forming and heat pressing steps out of the wet paper-pulp one the one hand is that the side wall SW, base wall BW and flange F are substantially rigid, whereas on the other hand the side wall SW and base wall BW are semi-permeable. Furthermore, the result is that the sealing flange region SFR is compressible and has such liquid absorption properties that it is able to swell. The relative low density of the sealing flange region SFR causes it to be well compressible when a pressing sleeve PS of a beverage production machine BPM gets pressed against it at a beginning of a brewing cycle, resulting in a good sealing effect with the pressing sleeve PS. Furthermore, the relative low density of the sealing flange region SFR causes it to be well able to absorb some of the pressurized liquid that gets injected into a brewing chamber BC of the beverage production machine BPM during a brewing cycle, due to which it may swell somewhat while improving the sealing action with pressing sleeve PS. In contrast thereto the liquid-barrier flange regions LBFR1, LBFR2 are hardly compressible if not to say largely incompressible and have such liquid absorption properties that they are hardly able to absorb or transfer pressurized liquid, while the edge flange region EFR is relative thick and strong.

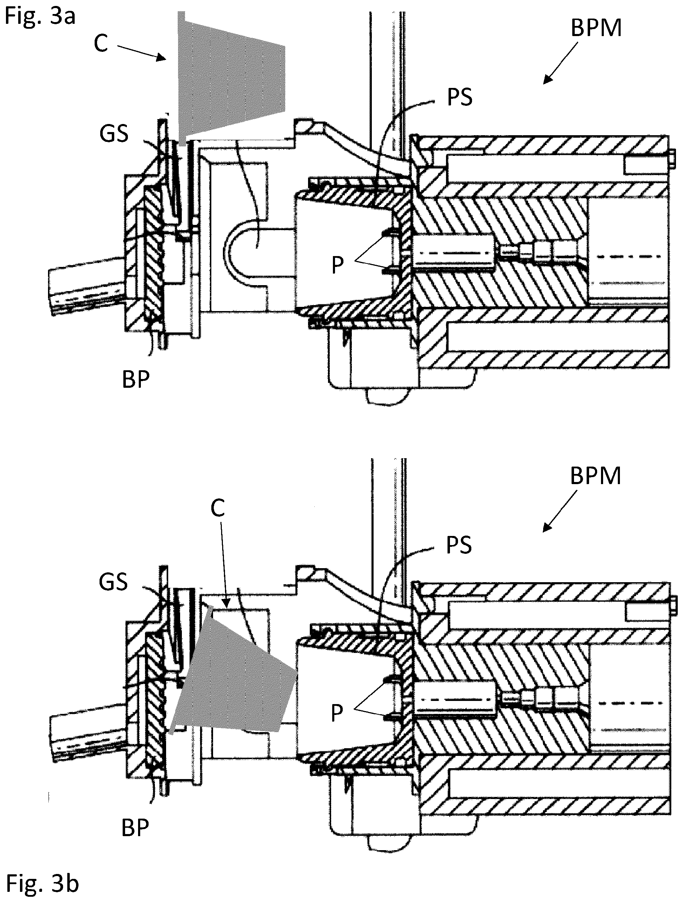

Fig. 3a schematically shows part of a beverage production machine BPM which comprises guiding slits GS for positioning the capsule C in a cavity in between a pressing sleeve PS and a profiled back plate BP of the machine. A longitudinal centre axis of the capsule C in fig. 3a extends horizontally and the flange F lies in a vertical plane. The pressing sleeve PS defines a hollow shape that is somewhat oversized but substantially complementary-shaped to the one of the side wall SW and base wall BW. Inside the pressing sleeve PS piercers P are provided that project a few mm into the hollow shape.

Fig. 3b shows that the capsule C has dropped down into the cavity. The capsule C then shall remain hanging slanted downwards with a front portion of its flange lying against the back plate BP.

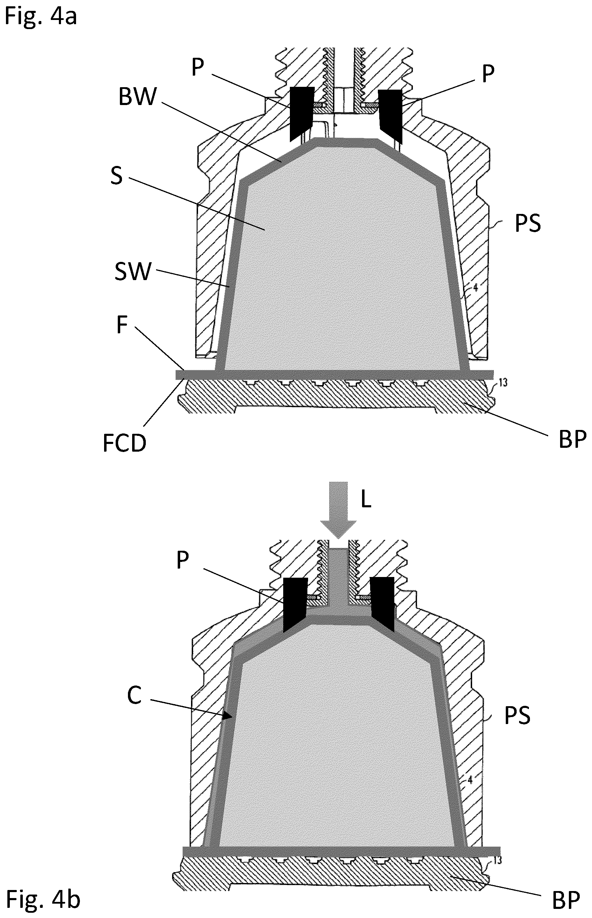

The pressing sleeve PS together with piercers P then may get pushed towards the back plate BP. See also fig. 4a.

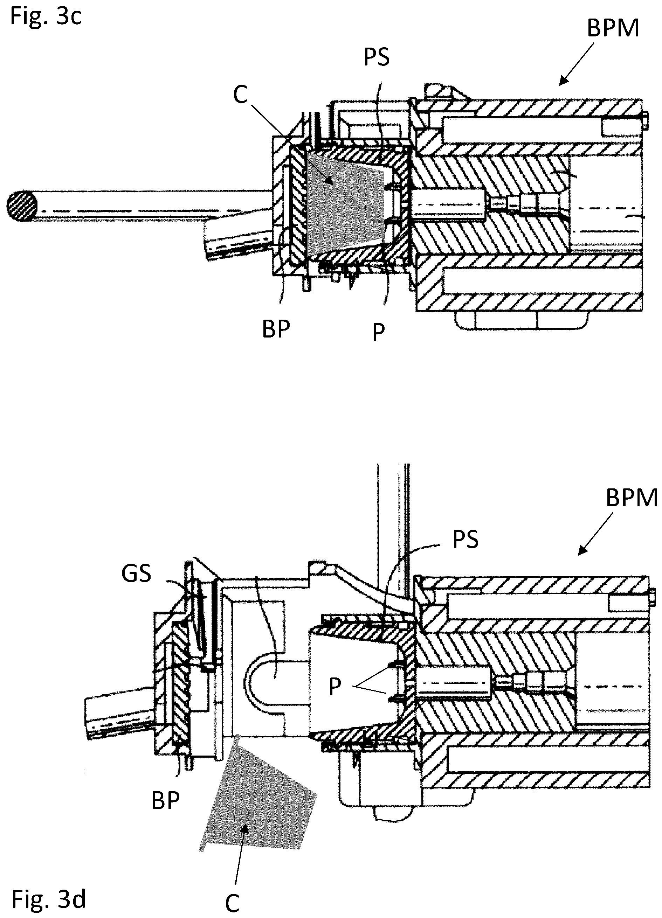

Fig. 3c and 4b show that the pressing sleeve PS has gotten pushed with a leading end against a back surface of the flange F which faces towards the base wall BW of the capsule C. At a same time the pressing sleeve PS then presses the foil closure disc FCD against the profiled back plate BP.

As is schematically shown in fig. 3c and 4b, the piercers P then have forced the base wall BW of the capsule C to deform inwards towards the base plate BP without the getting to penetrate through the base wall BW as the pressing sleeve PS moves forward to press on the flange F. The integrity of the base wall BW and side wall SW remains intact during the entire brewing cycle.

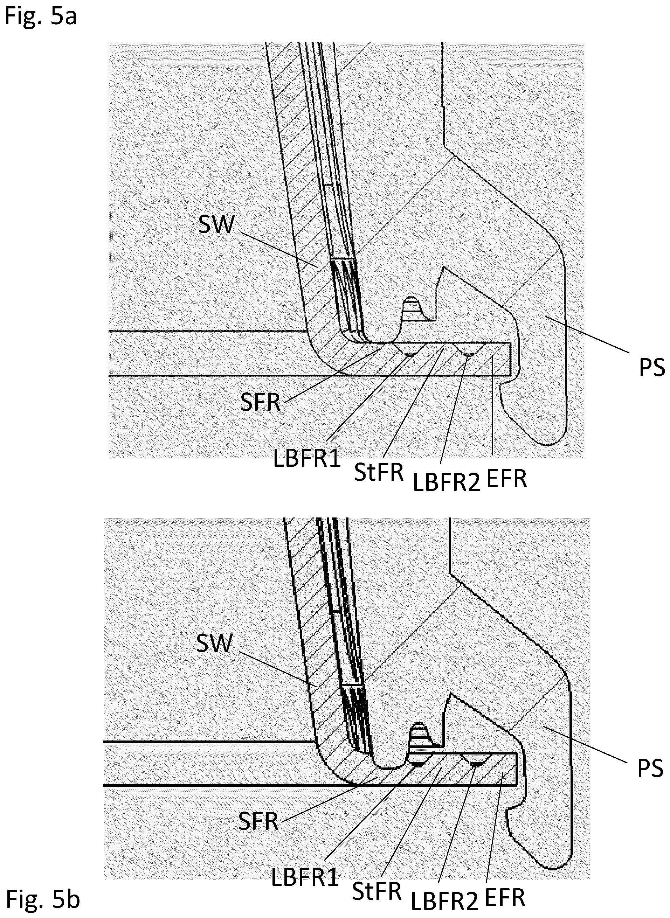

Fig. 5a shows the situation in which the leading end of the pressing sleeve PS has just gotten to lie against the flange F, whereas fig. 5b shows that the leading edge of the pressing sleeve PS has been pushed a little further to compress the sealing flange region SFR and get to lie sealing against it.

The machine then orders pressurized hot liquid L to enter and fill up the free space of the brewing chamber between the side wall SW and base wall BW of the capsule C and the pressing sleeve PS. This is shown in fig. 4b.

This liquid is injected into the free space of the brewing chamber at a pressure of, for example, 15-19 Bar, and is heated to a temperature, of for example, 95-98 degrees Celsius. The foil closure disc FCD has supported areas which lie against raised zones of the back plate BP, and has unsupported areas which span across depressions in the back plate BP.

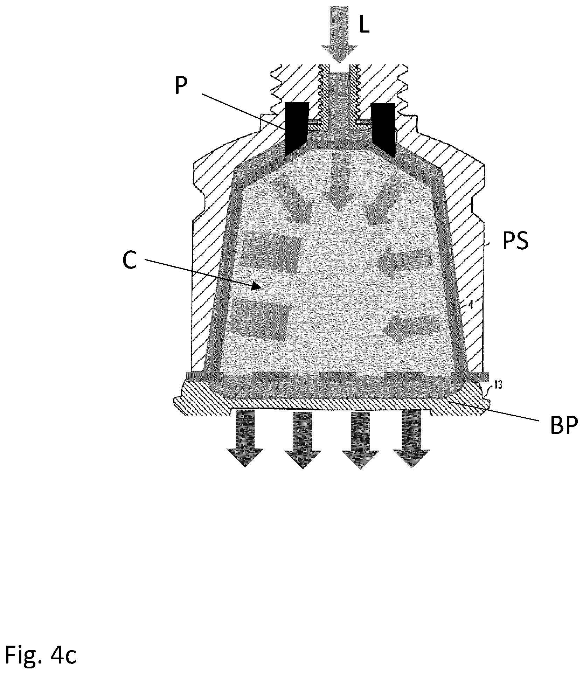

The pressurized liquid permeates through the semi-permeable paper-pulp side wall SW and base wall BW and thus arrives from all circumferential radial inwards directions through the entire side wall SW and in the axial inwards direction through the entire base wall BW inside the capsule body CB to interact there with the substance S stored inside the capsule C. The quickly rising liquid pressure inside the capsule C acting on the unsupported areas of the foil closure disc FCD causes them to burst permitting the beverage to flow out of the capsule C through perforated outlet openings which have thus been formed in the foil closure disc FCD. See fig. 4c.

All the time the pressurized liquid L is inside the brewing chamber, a part of it shall absorb into the sealing flange region SFR. Due to this the sealing flange region SFR may swell up somewhat, thus increasing the sealing effect. The pressurized liquid L however shall be unable to arrive all the way to the edge flange region EFR via absorption out of the sealing flange region SFR. This is efficiently blocked by the liquid-barrier flange regions LBFR1, LBFR2. Owing to this the outer edge flange region EFR is able to remain substantially dry during the entire brewing cycle.

Fig. 3d shows that at the end of the brewing cycle, the pressing sleeve PS gets released again to move back away from the base plate BP and thus release the capsule to freely drop down due to gravity. Since the edge flange region EFR has remained dry, it has remained its starting wall thickness t1 due to not swelling up, and has remained its starting strength for a release latch to be well able to exert a release force upon it. Also the dry outer edge flange region EFR shall not remain sticking to the guiding slits GS of the machine.

Besides the shown and described embodiments, numerous variants are possible. For example the dimensions and shapes of the various parts can be altered. The invention may advantageously be used not only for Nespresso-compatible capsules, but also for all kinds of other different capsule platforms. Instead of using paper-pulp other kinds of cellulose-fiber-based materials can also be used, like for example a combination of long fiber / short fiber / hard wood / soft wood/ mechanically engineered pulp. Instead of wet formed heat pressing, other manufacturing methods are also possible.

It should be understood that various changes and modifications to the presently preferred embodiments can be made without departing from the scope of the invention, and therefore will be apparent to those skilled in the art. It is therefore intended that such changes and modifications be covered by the appended claims.

## Claims

1. A cellulose-fiber-based capsule (C) for containing a substance (S) from which a beverage can be produced, the capsule (C) being designed for insertion in a beverage production machine (BPM) in which pressurized liquid (L) enters the capsule (C) in order to interact with the substance (S) in the capsule (C) and to drain a beverage from the capsule (C), comprising:
- a cup-like capsule body (CB) that comprises:
∘ a circumferential side wall (SW);
∘ a transverse base wall (BW) at a first end of the side wall (SW); and
∘ a radially outwardly protruding flange (F) encircling the circumferential side wall (SW) at its second end,
wherein the side wall (SW), base wall (BW) and flange (F) are integrally made out of a same cellulose-fiber-based material,
wherein the cellulose-fiber-based material flange (F) comprises:
• a radially inner ring-shaped sealing flange region (SFR); and
• a radially outer edge flange region (EFR),
**characterized in that,**
the cellulose-fiber-based material flange (F) further comprises:
• at least one radially intermediate ring-shaped liquid-barrier flange region (LBFR),
wherein the liquid-barrier flange region (LBFR) has lower liquid absorption properties than the sealing flange region (SFR) and edge flange region (EFR).

2. A cellulose-fiber-based capsule according to claim 1, wherein the cellulose-fiber-based material at the location of the liquid-barrier flange region (LBFR) has a reduced thickness (t2) and increased density compared to the thickness (t1) and density of the cellulose-fiber-based material at the locations of both the sealing flange region (SFR) and edge flange region (EFR).

3. A cellulose-fiber-based capsule according to claim 2, wherein the cellulose-fiber-based material at the location of the liquid-barrier flange region (LBFR) has a reduced thickness (t2) of at least 25%, in particular about 40%, compared to the thickness (t1) of the cellulose-fiber-based material at the locations of both the sealing flange region (SFR) and edge flange region (EFR), and wherein the cellulose-fiber-based material at the location of the liquid-barrier flange region (LBFR) has an increased density of at least 25%, in particular about 40%, compared to the cellulose-fiber-based material at the locations of both the sealing flange region (SFR) and edge flange region (EFR).

4. A cellulose-fiber-based capsule according to claim 2 or 3, wherein the thickness (t1) and density of the sealing flange region (SFR) and edge flange region (EFR) are substantially the same as the thickness (t1) and density of the side wall (SW) and base wall (BW), and are all thicker than the thickness (t2) of the liquid-barrier flange region (LBFR).

5. A cellulose-fiber-based capsule according to one of the preceding claims, wherein the thickness (t1) of the sealing flange region (SFR) and edge flange region (EFR) is between 0.6-1 mm, in particular about 0.75 mm, and wherein the thickness (t2) of the liquid-barrier flange region (LBFR) is between 0.2-0.5 mm, in particular about 0.45 mm.

6. A cellulose-fiber-based capsule according to one of the preceding claims, wherein at least two spaced apart ones of the liquid-barrier flange regions (LBFR) are provided, with a ring-shaped strengthening flange region (StFR) provided in between them that has higher liquid absorption properties than the liquid-barrier flange regions (LBFR).

7. A cellulose-fiber-based capsule according to one of the preceding claims, wherein the cellulose-fiber-based material capsule body (CB), including a front surface of the cellulose-fiber-based material flange (F), is not equipped with a plastic oxygen barrier liner, and wherein a foil closure disc (FCD) is directly adhered against the front surface of the cellulose-fiber-based material flange (F), in particular by means of a biodegradable compostable hotmelt.

8. A cellulose-fiber-based capsule according to claim 7, wherein the foil closure disc (FCD) is made out of cellulose-fiber-based material, in particular paper.

9. A cellulose-fiber-based capsule according to one of the preceding claims, wherein a front surface of the cellulose-fiber-based material flange (F) that is configured for connecting a foil closure disc (FCD) against, is flat faced along the sealing flange region (SFR), liquid-barrier flange region (LBFR) and edge flange region (EFR).

10. A cellulose-fiber-based capsule according to claim 9, wherein the foil closure disc (FCD) has radially outer dimensions that are the same as the ones of the cellulose-fiber-based material flange (F), such that the foil closure disc (FCD) is connectable to the entire flat faced front surface of the cellulose-fiber-based material flange (F).

11. A cellulose-fiber-based capsule according to one of the preceding claims, wherein the cellulose-fiber-based material out of which the side wall (SW), base wall (BW) and flange (F) of the cup-like capsule body (CB) are integrally made out of pulp, in particular paper-pulp.

12. Method for manufacturing a cellulose-fiber-based capsule (C) according to one of the preceding claims 1-11, comprising the steps:
- integrally manufacturing the side wall (SW), base wall (BW) and flange (F) of the cup-like capsule body (CB) out of the same cellulose-fiber-based material,
**characterized in that,**
the cellulose-fiber-based material flange (F) at the location of the at least one radially intermediate ring-shaped liquid-barrier flange region (LBFR) gets treated to have reduced liquid absorption properties compared to the cellulose-fiber-based material of the sealing flange region (SFR) and edge flange region (EFR), and in particular also compared to the cellulose-fiber-based material of the side wall (SW) and base wall (BW).

13. Method according to claim 12, wherein the cellulose-fiber-based material side wall (SW), base wall (BW) and flange (F) of the cup-like capsule body (CB) are integrally manufactured by means of wet forming out of pulp followed by one or more heat pressing steps,
**characterized in that,**
at least one of the one or more heat press steps involves locally compacting the wet formed cellulose-fiber-based material flange (F) at the location of the at least one radially intermediate ring-shaped liquid-barrier flange region (LBFR) to a reduced thickness (t2) and increased density compared to the cellulose-fiber-based material of the sealing flange region (SFR) and edge flange region (EFR), and in particular also compared to the cellulose-fiber-based material of the side wall (SW) and base wall (BW).

14. A beverage production assembly comprising:
- a cellulose-fiber-based capsule (C) according to one of the preceding claims 1-11 of which the cup-like capsule body (CB) contains substance (S) from which the beverage can be produced and that is closed by a foil closure disc (FCD) connected to the flange (F); and
- a beverage production machine (BPM) having:
∘ a pressing sleeve (PS) for sealing with the capsule (C); and
∘ means for feeding pressurized liquid (L), in particular heated liquid, to the capsule (C),
wherein the pressing sleeve (PS) and the flange (F) are configured to come to lie sealing against each other during beverage production,
**characterized in that,**
the at least one radially intermediate ring-shaped liquid-barrier flange region (LBFR) with lower liquid absorption properties is configured to lie radially outside of the pressing sleeve (PS).

15. A method for production of a beverage using the beverage production assembly according to claim 14, comprising the following steps:
- positioning the cellulose-fiber-based capsule (C) in the beverage production machine (BPM);
- feeding pressurized liquid (L) to the capsule (C) for interaction with the substance (S) inside the capsule (C), and draining a beverage from the capsule (C),
wherein the cellulose-fiber-based material side wall (SW) at its outwardly directed surface is in direct contact with the pressurized liquid (L) during beverage production, and
wherein the cellulose-fiber-based material flange (F) at its outwardly directed surface is sealed from direct contact with the pressurized liquid (L) during beverage production,
**characterized in that,**
the at least one radially intermediate ring-shaped liquid-barrier flange region(LBFR) with lower liquid absorption properties lies radially outside of the pressing sleeve (PS) and reduces and deteriorates liquid absorption from the cellulose-fiber-based material side wall (SW) to the radially outer cellulose-fiber-based material edge flange region (EFR) with higher liquid absorption properties.
